Europäisches Patentamt

European Patent Office

Office européen des brevets

(11) Numéro de publication : **0 445 001 A1**

(19)

(12) # DEMANDE DE BREVET EUROPEEN

(21) Numéro de dépôt : **91400461.9**

(51) Int. Cl.⁵ : **C08K 3/22**, C08K 13/02,
C08L 25/02, // (C08K13/02,
3:22, 5:02)

(22) Date de dépôt : **20.02.91**

(30) Priorité : **02.03.90 FR 9002673**
**30.03.90 FR 9004106**

(43) Date de publication de la demande :
**04.09.91 Bulletin 91/36**

(84) Etats contractants désignés :
**AT BE CH DE DK ES FR GB GR IT LI LU NL SE**

(71) Demandeur : **ATOCHEM**
**4 & 8, Cours Michelet La Défense 10**
**F-92800 Puteaux (FR)**

(72) Inventeur : **Bonnet, Evelyne**
**18, grande Avenue**
**F-60260 Lamorlaye (FR)**

(54) **Composition de résine styrénique thermoplastique ignifugée ayant une résistance améliorée à la chaleur.**

(57)    L'invention a pour objet une composition de résine styrénique thermoplastique ignifugée ayant une stabilité améliorée à la chaleur, essentiellement constituée d'un retardateur de combustion halogéné, ladite composition contenant en outre un oxyde ou hydroxyde de calcium.

EP 0 445 001 A1

# COMPOSITION DE RESINE STYRENIQUE THERMOPLASTIQUE IGNIFUGEE AYANT UNE RESISTANCE AMELIOREE A LA CHALEUR

Pour de nombreuses applications, il est indispensable de disposer de résines styréniques thermoplastiques ayant un comportement au feu amélioré.

A cette fin, on ajoute aux résines styréniques thermoplastiques des composés dénommés retardateurs de combustion (ignifugeants) qui sont généralement des composés organiques chlorés ou bromés.

Ces retardateurs de combustion peuvent être associés avec des retardateurs de combustion auxiliaires tels que l'oxyde d'antimoine ($Sb_2O_3$) afin d'obtenir un niveau d'efficacité suffisant.

Ces divers additifs peuvent être utilisés en des proportions qui peuvent aller de quelques pour cent à plusieurs dizaines de pour cent en poids par rapport à la résine styréniques thermoplastique à ignifuger.

Des pourcentages élevés seront nécessaires lorsqu'il faudra assurer une protection efficace et lorsque les résines styréniques thermoplastiques considérées sont hautement combustibles.

L'utilisation de ces additifs en quantité importante occasionne un certain nombre d'inconvénients notamment au moment de la mise en oeuvre (compoundage et moulage) desdites résines styréniques thermoplastiques ignifugées.

Ces résines sont soumises à des températures et des contraintes mécaniques élevées qui sont susceptibles de provoquer un début de décomposition des additifs ignifugeants halogénés.

Ce début de décomposition est de nature à abaisser de façon notoire les propriétés mécaniques et la tenue au feu des résines styréniques thermoplastiques ignifugées.

En outre, les produits de décomposition peuvent entraîner la détérioration par corrosion des parties métalliques des outillages de mise en oeuvre.

Pour tenter de remédier à ces effets indésirables de nombreux composés ont été utilisés.

Il existe une très abondante littérature sur l'utilisation notamment de sels minéraux et/ou organiques tels que le stéarate de calcium, le sulfate basique de zinc, le stéarate de zinc, les hydrotalcites décrites dans le brevet EP 129 805 ou dans la demande de brevet Japonais N. 60-86143, l'antimoniate de sodium décrit dans le brevet EP 288 269.

Cependant, ces composés précités provoquent des colorations et/ou conduisent -notamment dans le cas des hydrotalcites- à un mauvais aspect de surface (givrage et traces) rédhibitoire pour de nombreuses applications.

Il a maintenant été trouvé une composition de résine styréniques thermoplastique ignifugée, ayant une stabilité améliorée à la chaleur, essentiellement constituée d'au moins un retardateur de combustion halogéné éventuellement associé à un retardateur de combustion auxiliaire, caractérisée en ce qu'elle contient en outre un oxyde ou un hydroxyde métallique de calcium.

L'oxyde ou hydroxyde de calcium employé selon l'invention peut être utilisé sous forme de poudre ayant un diamètre au plus égal à 100 μm.

On utilisera avantageusement un oxyde ou un hydroxyde de calcium ayant une teneur en oxyde au moins égale à 95 % et de préférence, comprise entre 95 % et 99,99 %.

L'oxyde ou l'hydroxyde de calcium selon l'invention est incorporés en une quantité au moins égale à 0,01 partie en poids pour 100 parties de résine thermoplastique. De préférence on utilise 0,1 à 3 parties d'oxyde ou d'hydroxyde de calcium pour 100 parties en poids de résine thermoplastique.

Par résines styréniques thermoplastiques on désigne présentement les polymères de composés vinylaromatiques tels que le styrène, les styrènes alpha-substitués tels que l'alpha-méthylstyrène, les styrènes substitués sur le noyau aromatique, tels que l'orthochlorostyrène, le paraméthylstyrène ; les polymères précédents greffés sur le polybutadiène.

A titre d'illustration de résines styréniques thermoplastiques on citera le polystyrène et le polystyrène greffé polybutadiène dénommé polystyrène choc.

Parmi ces résines styréniques thermoplastiques l'invention concerne tout particulièrement le polystyrène choc.

S'agissant des retardateurs de combustion halogénés utilisés dans cette invention on peut citer notamment les paraffines chlorées, le polyéthylène chloré, le dodécachloropentacycloactadécadiène-7,15 (déchlorane plus), l'hexabromocyclododécane, le décabromodiphényle, le décabromodiphényle éther, le bistétrabromophtalimide, l'octabromodiphènyle éther, le polytribromostyrène, le polypentabromo-benzylacrylate, les dérivés des anhydrides tétrachloro- et tétrabromo phtaliques, les dérivés des tétrachloro- et tétrabromo- bis phénol A et les mélanges comprenant au moins deux des retardateurs de combustion énumérés ci-avant.

Parmi ces retardateurs de combustion chlorés et/ou bromés on donnera la préférence aux paraffines chlorés ayant une teneur en chlore au moins égale à 20 % en poids et de préférence une teneur comprise entre 50 % et 75 %.

D'une manière générale et à titre purement indicatif on recommande d'utiliser un ou plusieurs retardateurs de combustion chlorés et/ou bromés en une quantité au moins égale à 1 partie en poids pour 100 parties en poids de résine styrénique thermoplastique.

De préférence, on utilise 1 à 60 parties en poids de retardateur de combustion halogéné pour 100 parties de résine styrénique thermoplastique.

S'agissant plus précisément du polystyrène choc on utilisera avantageusement au moins 5 parties en poids de retardateur de combustion halogéné pour 100 parties en poids de polystyrène choc et de préférence une quantité comprise entre 5 et 30 parties.

Afin d'augmenter l'efficacité des retardateurs de combustion halogénés on peut avantageusement leur associer des composés métalliques tels que les oxydes d'antimoine et de bismuth en une quantité au moins égale à 0,01 partie en poids pour 100 parties en poids de résine styrénique thermoplastique et de préférence une quantité comprise entre 0,1 partie et 10 parties.

Selon un mode particulier de l'invention on peut utiliser complémentairement un ou plusieurs composés phénoliques choisis dans le groupe constitué par : le ditert.butyl-2,6 sec.butyl-4 phénol, le bis(ditert.butyl-3,5 hydroxy-2 phényl)-2,2 éthane, le triéthylèneglyclol bis(tert.butyl-3, hydroxy-4 méthyl-5 phényl)propionate, le tétrakis(ditert.butyl-3,5 hydroxy-4 phényl)-3 propionyl oxyméthyl méthane.

Ces composés selon l'invention peuvent être incorporés avantageusement entre 0,01 partie en poids et 1 partie en poids pour 100 parties en poids de résine thermoplastique et, de préférence entre 0,1 partie et 0,5 partie.

Les compositions selon l'invention peuvent renfermer également d'autres additifs tels que des pigments, des colorants, des stabilisants vis-à-vis des rayons ultraviolets, des antioxydants, des agents de démoulage et/ou des charges.

Les compositions de résines styréniques thermoplastiques selon l'invention peuvent être préparées par exemple en mélangeant à sec les granulés de polymère, l'oxyde ou l'hydroxyde de calcium selon l'invention, un ou plusieurs retardateurs de combustion halogénés éventuellement associés à un retardateur de combustion auxiliaire ainsi éventuellement que les divers additifs et charges précités. Ce mélange peut être effectué à température ambiante pendant une durée qui peut atteindre 1 heure.

Ce mélange à sec est avantageusement suivi d'un malaxage pour obtenir une bonne dispersion des additifs à une température comprise en général entre 190°C et 250°C.

On peut également préparer un mélange maître constitué par une dispersion de quantités importantes des divers composés selon l'invention dans une résine qui peut être identique ou différente de la résine styrénique thermoplastique principale.

Les proportions respectives des constituants dans ce mélange maître seront déterminées en fonction du degré d'inflammabilité recherché et relève de la compétence de l'homme de métier. Ce mélange maître est ensuite malaxé avec les granulés de polymères comme précédemment décrit.

Selon un mode particulièrement avantageux les compositions selon l'invention peuvent être également préparées en deux temps c'est-à-dire, d'une part réalistion d'un mélange d'au moins un retardateur de combustion associé éventuellement avec un retardateur de combustion auxiliaire et l'oxyde ou l'hydroxyde de calcium, puis d'autre part, malaxage de ce mélange avec la résine styréniques thermoplastique et les divers additifs et charges précités comme précédemment décrit.

Le mélange est ensuite moulé, par exemple par injection, à une température généralement de l'ordre de 200°C à 300°C.

L'oxyde ou l'hydroxyde de calcium selon l'invention confèrent aux compositions de résines styrénéques thermoplastiques ignifugées par des retardateurs de combustion halogénés une résistance améliorée contre les effets dégradants de la chaleur qui se produisent lors de la mise en oeuvre. En particulier les pièces conformées présentent un bel aspect de surface (absence quasi total de givrage et/ou de traces) et une excellente résistance aux UV.

Un autre avantage apporté par l'oxyde ou l'hydroxyde de calcium selon l'invention est de permettre des températures de transformation (extrusion et injection) plus élevées sans modification de couleur, ce qui améliore la productivité. Ceci permet également d'augmenter le temps de cycle et par suite la production de pièces plus importantes.

Les exemples suivants illustrent l'invention.

## EXEMPLE 1 (Témoin)

Des granulés de polystyrène choc d'indice de fusion (Melt Index : MI) 4 g/10 minutes mesuré à 200°C sous 5 kg et de densité 1,04 g/cm³ (DIN 5 3479) sont extrudés sur un malaxeur type CAFL à une température moyenne de 200°C.

Les granulés obtenus sont moulés au moyen d'une presse à injection BATTENFELD type UNILOG 2000 selon les conditions (A) :

- température : 200°C
- pression d'injection 50 bars
- temps de cycle 1'15".

Sur les éprouvettes obtenues on effectue :

- la mesure de l'indice d'oxygène selon la norme NFT 51071,
- l'essai de réaction au feu UL 94 selon la norme NFT 51072 (épaisseur des éprouvettes : 1,6 mm et 3,2 mm),
- la résistance au choc selon la norme ISO 180.

En vue de réaliser l'essai de tenue à la chaleur à l'injection on injecte 4 grappes d'éprouvettes à des temps de séjour croissant dans la presse qui sont respectivement de 1'15", 3'30", 5'45" et 8' selon les conditions (B) :

- température : 240°C
- pression d'injection : 35 bars
- retard à l'injection : 1 minute
- temps de cycle total : 2'15"

On observe ensuite les éprouvettes et on note d'une part la variation de la teinte (coloration) d'autre part la présence plus ou moins marquée du givrage selon les échelles arbitraires ci-après :

### – Evolution de la coloration

| 0 | 0$^+$ | 1 | 2 | 3 |
|---|---|---|---|---|
| blanc | Blanc cassé | gris | gris foncé | gris noir |

- Givrage

0 absence de traces en surface
1 légères traces en surface
2 traces importantes en surfaces
3 traces très importantes (éprouvette complètement dégradée)

### EXEMPLE 2 (Comparatif)

A 100 parties en poids de polystyrène choc ayant les mêmes caractéristiques que celui de l'exemple 1 on ajoute :

- 20 parties en poids de paraffine chlorée (Cl % = 70)
- 10 parties en poids de $Sb_2O_3$
- 1,5 parties en poids d'agent enrobant (huile de paraffine).

On mélange à sec les différents constituants dans un mélangeur type TURBULA pendant 15' puis alimente avec ce mélange un malaxeur type CAFL dont la température moyenne est de 200°C.

Les granulés obtenus sont moulés par injection dans les conditions (A) et (B) décrites dans l'exemple 1 pour obtenir les éprouvettes en vue de réaliser l'essai thermique et les différentes mesures d'indice d'oxygène, de résistance au choc et de réaction au feu (UL 94).

### EXEMPLE 3

A la formule de l'exemple 2 on ajoute 0,5 partie en poids de CaO puis on procède comme décrit dans l'exemple 1.

### EXEMPLE 4

A la formule de l'exemple 2 on ajoute 2 parties en poids de Ca 0 puis on procède comme décrit dans l'exemple 1.

### EXEMPLE 5 (Comparatif)

A la formule de l'exemple 2 on ajoute 2 parties en poids d'hydrotalcite (Alcamizer 2) puis on procède comme décrit dans l'exemple 1.

### EXEMPLE 6

A la formule de l'exemple 3 on ajoute 0,05 partie en poids de bis(diter. butyl-3,5 hydroxy-2 phényl)-2,2 éthane puis on procède comme décrit dans l'exemple 1.

### EXEMPLE 7

A 100 parties en poids de polystyrène choc ayant les mêmes caractéristiques que celui de l'exemple 1 on ajoute :
- 13 parties en poids de paraffine chlorée (Cl % = 70)
- 4 parties en poids de décabromodiphényle
- 8,5 parties en poids de $Sb_2 O_3$
- 1,5 parties en poids d'agent enrobant (huile de parafffine)
- 2 parties en poids de Ca 0.

On procède ensuite comme décrit dans l'exemple 1.

### EXEMPLE 8

Identique à la formule de l'exemple 8 sauf que l'on remplace les 4 parties en poids de décabromodiphényle par 4 parties en poids de bis tétrabromophtalimide.

On procède ensuite comme décrit dans l'exemple 1.

### EXEMPLE 9

A la formule de l'exemple 2 on ajoute 1 partie en poids de $Ca(OH)_2$, puis on procède comme décrit dans l'exemple 1.

Les résultats des essais sont rapportés dans le tableau ci-après.

| EXEMPLE | ESSAI UL 94 | | IO | CHOC | STABILITE THERMIQUE | | | | GIVRAGE | | | |
|---|---|---|---|---|---|---|---|---|---|---|---|---|
| | 3,2 mm | 1,6 mm | % | IZOD | I | II | III | IV | I | II | III | IV |
| 1 | NC | NC | 18,3 | 14,5 | 0 | 0 | 0 | 0 | 0 | 0 | 0 | 0 |
| 2 | VO | V2 | 24 | 4,2 | 0 | $0^+$ | 1 | 2 | 0 | 0 | 0 | 2 |
| 3 | VO | VO | 24 | 5,1 | 0 | 0 | $0^+$ | 1 | 0 | 0 | 0 | 0 |
| 4 | VO | V2 | 23,5 | 3,8 | 0 | 0 | 0 | $0^+$ | 0 | 0 | 0 | 0 |
| 5 | VO | V2 | 23,7 | 4,9 | 0 | 0 | $0^+$ | 1 | 0 | 0 | 1 | 2 |
| 6 | VO | VO | 23,5 | 5 | 0 | 0 | $0^+$ | 1 | 0 | 0 | 0 | 0 |
| 7 | VO | VO | 23,5 | 7,2 | 0 | 0 | 0 | $0^+$ | 0 | 0 | 0 | 0 |
| 8 | VO | VO | 23,5 | 6,6 | 0 | 0 | 0 | $0^+$ | 0 | 0 | 0 | 0 |
| 9 | VO | VO | 24,2 | 6,3 | 0 | 0 | 0 | $0^+$ | 0 | 0 | 0 | 0 |

Dans ce tableau, les temps de séjour dans la presse à 240°C sont désignés comme suit :

    I   :  1'15"
    II  :  3'30"
    III :  5'45"
    IV  :  8'

**Revendications**

1.  Composition de résine styrénique thermoplastique ignifugée essentiellement constituée d'au moins un retardateur de combustion halogéné éventuellement associé à un retardateur de combustion auxiliaire, caractérisée en ce qu'elle contient au plus un oxyde ou un hydroxyde de calcium.

2.  Composition selon la revendication 1 caractérisée en ce qu'elle comprend au moins 0,01 partie en poids d'un oxyde ou d'un hydroxyde de calcium pour 100 parties en poids de résine styrénique thermoplastique.

3.  Composition selon la revendication 2 caractérisée en ce qu'elle comprend au moins 0,1 à 3 parties en poids d'un oxyde ou d'un hydroxyde de calcium pour 100 parties en poids de résine styréniques thermoplastique.

4.  Composition selon la revendication 1, caractérisée en ce que la résine styrénique thermoplastique est un polystyrène choc.

5.  Composition selon l'une quelconque des revendications 1 à 4, caractérisée en ce que le retardateur de combustion halogéné est une paraffine chlorée.

6.  Composition selon la revendication 5, caractérisée en ce que la paraffine chlorée a une teneur en chlore au moins égale à 20 % en poids et de préférence une teneur comprise entre 50 % et 75 %.

7.  Composition selon l'une quelconque des revendications 1 à 6 caractérisée en ce qu'elle comprend au moins une partie en poids d'un retardateur de combustion halogéné pour 100 parties de résine styrénique thermoplastique.

8.  Composition selon la revendication 7, caractérisée en ce qu'elle comprend 1 à 60 parties en poids d'un retardateur de combustion halogéné pour 100 parties de résine styrénique thermoplastique et de préférence une quantité comprise entre 5 et 30 parties.

9.  Composition selon la revendication 1 caractérisée en ce que le retardateur de combustion auxiliaire est un composé métallique choisi parmi les oxydes d'antimoine et de bismuth.

10. Composition selon la revendication 9, caractérisée en ce qu'elle comprend au moins 0,01 partie en poids d'un retardateur de combustion auxiliaire pour 100 parties en poids de résine styrénique thermoplastique.

11. Composition selon la revendication 10, caractérisée en ce qu'elle comprend 0,1 partie à 10 parties en poids d'un retardateur de combustion auxiliaire pour 100 parties en poids de résine styrénique thermoplastique.

12. Composition selon la revendication 1, caractérisée en ce qu'elle comprend au moins un composé phénolique choisi dans le groupe constitué par le ditert.butyl-2,6 sec.butyl-4 phénol, le bis(ditert.butyl-3,5 hydroxy-2 phényl)-2,2 éthane, le triéthylèneglyclol bis(tert.butyl-3, hydroxy-4 méthyl-5 phényl)propionate, le tétrakis(ditert.butyl-3,5 hydroxy-4 phényl)-3 propionyl oxyméthyl méthane.

13. Composition selon la revendication 12 caractérisée en ce qu'elle comprend 0,01 partie en poids et 1 partie en poids d'un composé phénolique pour 100 parties en poids de résine styrénique thermoplastique et de préférence entre 0,1 partie et 0,5 partie.

Office européen
des brevets

# RAPPORT DE RECHERCHE EUROPEENNE

Numero de la demande

EP    91 40 0461

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4360624 (J. HUANG ET AL.)<br>* colonne 2, ligne 22 - colonne 45;<br>revendication 1 *<br>--- | 1-13 | C08K3/22<br>C08K13/02<br>C08L25/02<br>//(C08K13/02,<br>3:22,5:02) |
| X | US-A-4136135 (Y. LEE)<br>* exemple 15; revendications *<br>--- | 1-13 | |
| X | DATABASE WPIL, no. 84-215804, Derwent Publicatio ns Ltd, London, GB; & JP-A-59124944 (YOKOHAMA RUBBER KK) 19-07-1984<br>* abrégé *<br>--- | 1-13 | |
| X | DATABASE WPI, no. 76-50958x, Derwent Publication s Ltd, London, GB; & JP-A-51057752 (ADEKA ARGUS CH KK) 21-05-1976<br>* abrégé *<br>----- | 1-13 | |
| | | | **DOMAINES TECHNIQUES RECHERCHES (Int. Cl.5 )**<br><br>C08K<br>C08L |

Le présent rapport a été établi pour toutes les revendications

| Lieu de la recherche | Date d'achèvement de la recherche | Examinateur |
|---|---|---|
| LA HAYE | 31 MAI 1991 | HOFFMANN K.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)